# EUROPÄISCHE PATENTSCHRIFT

(11) **EP 4 061 903 B1**
(45) Veröffentlichungstag und Bekanntmachung des Hinweises auf die Patenterteilung: **30.07.2025**
(21) Anmeldenummer: 20803865.3
(22) Anmeldetag: 16.11.2020
(51) Int. Cl.: C09J 111/00, C08K 7/02

(54) **NASSVERKLEBUNG VON LAGERSTABILEN 1K-SPRÜHKLEBSTOFFEN AUF BASIS POLYCHLOROPREN**
WET BONDING OF STORAGE STABLE 1K SPRAY ADHESIVES BASED ON POLYCHLOROPRENE
COLLAGE HUMIDE DES ADHÉSIFS DE PULVÉRISATION 1K À BASE DE POLYCHLOROPRÈNE STABLES AU STOCKAGE

(30) Priorität: 20.11.2019 EP 19210363
(43) Veröffentlichungstag der Anmeldung: 28.09.2022
(73) Patentinhaber: Covestro Deutschland AG, 51373 Leverkusen (DE)
(72) Erfinder: WIPPERFUERTH, Udo, 51061 Köln (DE); KEMPKES, Juergen, 51069 Köln (DE); KUEKER, Peter, 51377 Leverkusen (DE); THIEBES, Christoph, 51061 Köln (DE); DIJKSTRA, Dirk, 50667 Köln (DE); MUSCH, Ruediger, 51467 Bergisch Gladbach (DE)
(74) Vertreter: Levpat
(86) Internationale Anmeldenummer: PCT/EP2020/082178
(87) Internationale Veröffentlichungsnummer: WO 2021/099234

(56) Entgegenhaltungen:
- EP-A1- 3 447 102
- US-A1- 2007 224 395
- US-A1- 2014 137 435
- US-A1- 2017 130 014

## Beschreibung

Die Erfindung betrifft eine wässrige Formulierung enthaltend a) mindestens ein Polychloropren, b) mindestens ein (Meth)acrylsäureester-Copolymer, c) mindestens eine mikrofibrillierte Cellulose als Verdicker, und d) gegebenenfalls weitere Additive, ein Verfahren zur Herstellung der erfindungsgemäßen wässrigen Dispersion, ein Verfahren zur Herstellung einer Nass-in-Nass Verklebung von Substraten, ein Verfahren zur Herstellung eines Verbundmaterials und die Verwendung der erfindungsgemäßen wässrigen Dispersion zur Verklebung.

Versprühbare Kontaktkleber auf der Basis von Polychloropren-Dispersionen sind dem Fachmann an sich bekannt und werden in verschiedenen Bereichen eingesetzt, besonders zur Schaumverklebung im Matratzen- und Möbelsektor. Insbesondere die folgenden beiden Verfahren sind bekannt:
Beim 2K(2 Komponenten)-Verfahren werden mit einer Spritzpistole, die zwei Düsen besitzt, gleichzeitig Klebstoff-Formulierung und wässriges Koagulationsmittel verdüst. Im Sprühstrahl treffen beide Mischungen auf einander und koagulieren dort und/oder auf der Substratoberfläche, siehe dazu Katsuyuki Hara, Institute of Technology, Osaka Japan, "Two part spray mixing water borne adhesive" World adhesive congress, Munich, June, 8 to 10, 1988. Dieses Verfahren ist jedoch störanfällig und schwer zu handhaben, da beide Komponenten konstant in einem bestimmten Mischungsverhalten verdüst werden müssen.

Beim 1K(1 Komponenten)-Verfahren wird eine Klebstoff-Formulierung mit einer begrenzten Scherstabilität durch eine Spritzpistole mit einer Düse versprüht. Dabei ist zu beachten, dass die Formulierung lagerstabil ist und sich die Viskosität nicht ändert. Gemäß Stand der Technik können wässrige 1K-Formulierungen zur Destabilisierung der Klebstoff-Dispersion, um diese nassklebrig zu machen, organische Lösemittel enthalten, siehe beispielsweise EP 0 814 139 A1 oder DE 3 028 693 A1. Aufgrund von ökologischen, ökonomischen, Arbeitssicherheits- und Hygiene-Gründen besteht jedoch ein wachsender Bedarf an lösemittelfreien Klebstoff-Formulierungen.

Als weiterer Nachteil der bekannten wässrigen 1K-Formulierungen im Vergleich zu lösemittelhaltigen Systemen können die geringe Anfangsfestigkeit unmittelbar nach dem Fügen auf Grund von im Klebstoff eingeschlossenem Wasser genannt werden.

In den Schriften EP 0 624 634 A1 und EP 0 470 928 A1 werden lösemittelfreie, wässrige 1K-Formulierungen zum elastischen Verkleben von Substratflächen beschrieben, die bei Verklebungen höhere Anfangsfestigkeiten besitzen, da sie eine Mischung aus (Meth)acrylsäureester-Copolymeren und Polychloropren enthalten. Eine zusätzliche Destabilisierung der wässrigen Polymerdispersion (Latex) ist durch eine Erniedrigung des pH-Werts möglich. Der pH-Wert wird so eingestellt dass der Latex direkt nach Auftragung auf das Substrat einen Film bildet und verpresst beziehungsweise verklebt werden kann. Dies geschieht beispielsweise durch Zugabe von schwachen Säuren, beispielsweise Borsäure, Hydrogencarbonat, Essigsäure, Glycin, anderen Aminosäuren, Weinsäure, Zitronensäure, oder deren Alkali- und Erdalkalisalzen, wobei die Formulierung bis zu einem Punkt destabilisiert wird, an dem sie unter Scherung oder Druck direkt einen Film bildet und verklebt werden kann. Diese drucksensiblen Dispersionen koagulieren beim Austritt aus der Düse der Spritzpistole.

Bei entsprechenden, destabilisierten Dispersionen ist die geringe Lagerfähigkeit, insbesondere die Neigung zu Koagulation beim Transport oder bei Temperaturschwankungen, nachteilig.

Eine weitere Möglichkeit, 1K-Sprühklebstoffe auf Basis von Polychloropren herzustellen, wird in der Schrift DE 10 2009 020497 A1 beschrieben und besteht im Zusatz von Phthalaten. Viele dieser Phthalate sind gesundheitlich bedenklich und als zulassungspflichtige Stoffe gelistet, beispielsweise die Verbindung mit der CAS-Nummer 84-69-5. Darüber hinaus können diese Phthalate in die Klebschicht migrieren. Gerade bei polychloroprenhaltigen Klebstoffformulierungen führt dies zu einem deutlichen Abfall der Klebkraft.

In der Schrift WO 2008/034856 A2 werden Klebstoffformulierungen enthaltend Polychloropren-Dispersionen, kolloidales Siliciumdioxid und wasserlösliche Cellulose-Verdickern beschrieben. Ziel war es hier, Klebstoff-Dispersionen mit höherer Wärmebeständigkeit zu erhalten. Über die Lagerbeständigkeit dieser Formulierungen werden keine Aussagen gemacht.

In EP 3 444 310 A1 wird ein Verfahren beschrieben, bei dem dextrinhaltige Klebstoffe für die Verklebung von Wellpappen durch den Zusatz von mikrofibrillierter Cellulose in ihren rheologischen Eigenschaften verbessert werden. Die Viskositäts- und Lagerstabilität ist jedoch unzureichend, da die Viskosität der Formulierung in 4 Tagen von 2000 auf 5000 mPa*s ansteigt, und die Mischung in kurzen Abständen gerührt werden muss, um eine Sedimentation während der Lagerung zu verhindern.

In EP 3 406 140 A1 wird die Verwendung von Polychloropren-Dispersionen in Kombination mit kolloidalem Siliciumdioxid, Weißpigmenten und mikrofibrillierter Cellulose als Schutzschicht für Setzlinge oder Bäume beschrieben. Die Auftragung erfolgt beispielsweise durch Sprühapplikation. Diese Formulierungen neigen in dem für Sprühapplikationen sinnvollen Viskositätsbereich bei der Lagerung zu Entmischung, wobei sich die Formulierungskomponenten mit hoher Dichte, insbesondere kolloidales Siliciumdioxid oder Weißpigmente, absetzen.

Darüber hinaus können anionische, mit Harzsäuren stabilisierte, kommerziell verfügbare Polychloropren-Dispersionen im Laufe der spezifizierten Lagerzeit signifikante Mengen HCl abspalten. Diese Zusatzbelastung führt bei fertig formulierten, reaktiven 1K-Klebstoff-formulierungen zu einer zusätzlichen Begrenzung der Lagerstabilität, weil der sinkende pH-Wert die Formulierung zusätzlich destabilisiert. Dieses Problem sowie ein möglicher Säure-Angriff der freiwerdenden HCl auf eventuell pH-empfindliche Substrate werden üblicherweise durch Zugabe von zweiwertigen vordispergierten Metalloxiden, insbesondere ZnO, MgO und/oder CaO, zum Teil als Nanoteilchen vorliegend, und/oder aminischen Säurefängern, insbesondere Hydroxylamin, Ethanolamin, Kondensationsprodukte und/oder Derivaten davon, gelöst, siehe beispielsweise WO 2004/106422 A1. Der Einsatz von mehrwertigen Metalloxiden wie MgO und CaO ist in anionischen, mit Harzsäuren stabilisierten, Polychloropren-Dispersionen nicht wünschenswert, da dadurch der Latex destabilisiert wird. Höhere Konzentrationen als 0,24 Gew.-% ZnO sind darüber hinaus in verschiedenen Ländern kennzeichnungspflichtig und erschweren aufgrund ihres amphoteren Charakters erheblich die Herstellung von stabilen Klebstoffformulierungen mit einem pH-Wert kleiner 9.

Es besteht somit weiterhin Bedarf an wässrigen 1K-Formulierungen, die die beschriebenen Nachteile nicht aufweisen, insbesondere an 1K-Formulierungen, die unmittelbar nach dem Versprühen eine hohe Anfangsfestigkeit zeigen, lange lagerfähig sind ohne zu koagulieren, viskositätsstabil sind, obwohl sich der pH-Wert der Formulierung während der Lagerung ändert und toxikologisch unbedenklich sind.

Aufgabe der vorliegenden Erfindung ist somit die Bereitstellung entsprechender 1K-Formulierungen, insbesondere von ökologisch und ökonomisch vorteilhaften, alterungs-, lagerungs- und scherstabilen, wässrigen Klebstoffzusammensetzungen, die nach der Applikation auf das zu verklebende Substrat, insbesondere sofort nach dem Fügen, eine ausreichend hohe Anfangsfestigkeit, d.h. Nassfestigkeit, besitzen. Des Weiteren sollen die bereitgestellten 1K-Formulierungen trotz des Verzichts auf potentiell umweltgefährdende Säurefänger wie ZnO eine hervorragende pH-Wert-Stabilität und eine ausgezeichnete Alterungsstabilität aufweisen.

Diese Aufgaben werden erfindungsgemäß gelöst durch eine wässrige Formulierung enthaltend
a) mindestens ein Polychloropren,
b) mindestens ein (Meth)acrylsäureester-Copolymer,
c) mindestens eine mikrofibrillierte Cellulose als Verdicker, und
d) gegebenenfalls weitere Additive,
wobei dass
a) das mindestens eine Polychloropren zu mindestens 65 Gew.-%,
b) das mindestens eine (Meth)acrylsäureester-Copolymer zu 12 bis 35 Gew.-%,
c) die mindestens eine mikrofibrillierter Cellulose zu 0,05 bis 5 Gew %, und
d) die gegebenenfalls vorliegenden Additive zu 0,1 bis 30 Gew.-%,
jeweils bezogen auf das Gesamtgewicht der nichtflüchtigen Anteile der Formulierung, vorliegen, und die Summe der vorliegenden Komponenten jeweils 100 Gew.-% ergibt, wobei die mikrofibrillierte Cellulose Fibrillen mit einem Durchmesser 10 bis 100 nm aufweist, bestimmt mit einem Rasterelekronenmikroskop.

Die wesentlichen und optionalen Komponenten der erfindungsgemäßen wässrigen Dispersion werden im Folgenden detailliert beschrieben.

### a) Polychloropren:

Erfindungsgemäß werden die Begriffe "Dispersion" und "Formulierung" gleichbedeutend verwendet. Bevorzugt liegt erfindungsgemäß eine wässrige Formulierung vor, die sowohl dispergierte als auch gelöste Anteile aufweist.

Die erfindungsgemäße wässrige Formulierung enthält als Komponente a) mindestens ein Polychloropren.

Die Herstellung des in der erfindungsgemäßen Dispersion vorhandenen Polychloroprens kann nach dem Fachmann an sich bekannten Verfahren erfolgen, beispielsweise durch eine Emulsionspolymerisation im alkalischen, wässrigen Medium, beispielsweise beschrieben in "Ullmanns Encyclopädie der technischen Chemie", Band 9, S. 366, Verlag Urban und Schwarzenberg, München-Berlin 1957, "Encyclopedia of Polymer Science and Technology", Vol. 3, S. 705 bis 730, John Wiley, New York 1965 oder "Methoden der Organischen Chemie" (Houben-Weyl) XIV/l, Seiten 738 f. Georg Thieme Verlag Stuttgart 1961.

Erfindungsgemäß kann als Komponente a) der erfindungsgemäßen Dispersion mindestens ein Polychloropren-Homopolymer oder mindestens ein Polychloropren-Copolymer eingesetzt werden. Geeignete Polychlorporen-Copolymere werden beispielsweise erhalten durch Polymerisation von Chloropren und 0 bis 20 Gew.-% mindestens eines mit Chloropren copolymerisierbaren, ethylenisch ungesättigten Monomeres, bevorzugt in einem alkalischen Medium.

Geeignete copolymerisierbare Monomere werden beschrieben in "Methoden der Organischen Chemie" (Houben-Weyl) XIV/l, 738 f. Georg Thieme Verlag Stuttgart 1961. Bevorzugt sind Verbindungen mit 3 bis 12 C-Atomen und 1 oder 2 copolymerisierbaren C-C-Doppelbindungen pro Molekül. Beispiele bevorzugter copolymerisierbarer Monomere sind 2,3-Dichlorbutadien und 1-Chlorbutadien. Außerdem kann auch Schwefel als anorganisches copolymerisierbares Monomer in Dispersionsform eingesetzt werden.

Das mindestens eine Polychloropren, welches als Komponente a) eingesetzt wird, wird bevorzugt als Polychloropren-Dispersion eingesetzt. Die erfindungsgemäß bevorzugt einzusetzenden Polychloropren-Dispersionen werden beispielsweise durch Emulsionspolymerisation bei 0 bis 70 °C, vorzugsweise 5 bis 45 °C, und einem pH-Wert von 10 bis 14, vorzugsweise 11 bis 13, hergestellt. Die Aktivierung erfolgt durch die üblichen Aktivatoren bzw. Aktivatorsysteme. Die Herstellung der erfindungsgemäß eingesetzten Polychloropren-Dispersion kann sowohl kontinuierlich als auch diskontinuierlich erfolgen, wobei die kontinuierliche Polymerisation bevorzugt ist.

Erfindungsgemäß besonders geeignete Polychloropren-Dispersionen werden durch Emulsionspolymerisation von Chloropren und ggf. eines mit Chloropren copolymerisierbaren ethylenisch ungesättigten Monomeren in alkalischem Medium hergestellt, wie beispielsweise offenbart in der WO-A 02/24825, DE-A 30 02 734, US-A 5,773, 544 oder WO 2009/027013 A. Besonders bevorzugt sind Polychloropren Dispersionen, die durch kontinuierliche Polymerisation hergestellt werden, wie beispielsweise beschrieben in der WO 02/24825 A, insbesondere Beispiel 2, und DE 3 002 734, insbesondere Beispiel 6, wobei der Reglergehalt zwischen 0,01 % und 0,3 % variiert werden kann.

In der erfindungsgemäßen Formulierung liegt das mindestens eine Polychloropren bevorzugt in Partikeln mit einer mittleren Teilchengröße von 30 bis 400 nm, bevorzugt 50 bis 300 nm, besonders bevorzugt 60 bis 220 nm jeweils bestimmt durch das Verfahren gemäß der DIN ISO 13321 -2004, vor und weist weiter bevorzugt einen Restmonomer-Gehalt von weniger als 100 ppm, bevorzugt weniger als 50 ppm und besonders bevorzugt weniger als 20 ppm und ganz besonders bevorzugt weniger als 10 ppm auf.

Zur Einstellung des Molekulargewichtes bzw. Molekulargewichtsverteilung der erfindungsgemäß eingesetzten Polymers können übliche Kettenübertragungsmittel, beispielsweise Mercaptane, beschrieben in DE 3 002 711 A, GB 1 048 235 A, FR 2 073 106 A, oder Xanthogendisulfide, beschrieben in DE 1 186 215 A, DE 2 156 453 A, DE 2 306 610 A und DE 3 044 811 A, in EP 0 053 319 A, GB 512 458 A, GB 952 156 A und US 2 321 693 A und US 2 567 117 A beschrieben sind, verwendet werden.

Die Polymerisation zur Herstellung des Polychloroprens wird üblicherweise bei einem Monomerumsatz von 50 bis 95%, bevorzugt 60 bis 80%, abgebrochen, wobei als Inhibitor beispielsweise Phenothiazin, tert-Butylbrenzcatechin und/oder Diethylhydroxylamin eingesetzt werden kann. Nach erfolgter Polymerisation wird das restliche Chloropren-Monomer bevorzugt bis auf eine Restkonzentration von weniger als 100 ppm, bevorzugt weniger als 50 ppm, beispielsweise durch eine Wasserdampfdestillation und/oder Kolonnenentgasung, entfernt. Das Entfernen wird durchgeführt wie beispielsweise beschrieben in W. Obrecht in Houben-Weyl: Methoden der organischen Chemie Bd. 20 Teil 3 Makromolekulare Stoffe, (1987) S. 852 ff.

Die Lagerung des Polychloroprens erfolgt bevorzugt bei einer Temperatur von 50 bis 110 °C, bevorzugt 60 bis 100 °C, besonders bevorzugt 70 bis 90 °C, wobei der in organischen Lösemitteln unlösliche Anteil (Gelanteil) um mindestens 10 Gew.-% auf 1bis 60 Gew.-%, bevorzugt auf 5 bis 30 Gew.-%, besonders bevorzugt auf 10 bis 20 Gew.-%, ansteigt.

Alternativ kann der Gelanteil durch Verringerung der Reglerkonzentration und/oder Erhöhung des Monomerumsatzes erreicht werden. Die genannten Polychloroprene mit unterschiedlichen Gelanteilen können sich in den Polymereigenschaften, wie beispielsweise der Wärmebeständigkeit (Softening Point), voneinander unterscheiden.

In einem weiteren Schritt kann der Feststoffgehalt der Dispersion durch einen Aufrahmprozess erhöht werden. Diese Aufrahmung erfolgt z.B. durch Zusatz von Alginaten, wie in "Neoprene Latices , John C. Carl, E.I. Du Pont 1964, S.13" beschrieben.

Geeignete Polychloropren-Dispersionen a) gemäß der vorliegenden Erfindung sind kommerziell beispielsweise unter dem Handelsnamen Dispercoll^{®} C von der Covestro Deutschland AG erhältlich.

In einer bevorzugten Ausführungsform liegt das mindestens eine Polychloropren zu mindestens 70 Gew.-%, bezogen auf das Gesamtgewicht der nichtflüchtigen Anteile der Formulierung, vor.

### b) (Meth)acrylsäureester-Copolymere:

Erfindungsgemäß kann der Begriff (Meth)acrylsäureester sowohl Methacrylsäure, als auch Acrylsäure als auch Methacrylsäureester, als auch Acrylsäureester, als auch eine Mischung von zwei oder mehreren davon bedeuten.

Die erfindungsgemäße Formulierung enthält des Weiteren mindestens ein (Meth)acrylsäureester-Copolymer b). Erfindungsgemäß bevorzugt werden Copolymere enthaltend mindestens (Meth)acrylsäure, mindestens einen (Meth)acrylsäureester und/oder mindestens ein weiteres Monomer, beispielsweise Styrol, eingesetzt. Besonders bevorzugt werden erfindungsgemäß Acrylsäureester-Copolymere enthaltend mindestens einen Acrylsäureester und mindestens ein weiteres Monomer, insbesondere Styrol, eingesetzt.

Geeignete (Meth)acrylsäureester-Copolymere, insbesondere Styrol-(Meth)acrylsäureester-Copolymere, insbesondere wässrige Dispersionen davon, und Verfahren zu deren Herstellung sind dem Fachmann bekannt. Sie sind z.B beschrieben in Irving Skeist Handbook of Adhesives 2. Edition 1977 Seite 528 f "Acrylic adhesives and sealants, K. Eisenträger, W. Druschke".

Das mindestens eine (Meth)acrylsäureester-Copolymer liegt zu 12 bis 35 Gew.-%, bevorzugt 15 bis 30 Gew.-%, besonders bevorzugt 18 bis 28 Gew.-%, bezogen auf das Gesamtgewicht der nichtflüchtigen Anteile der Formulierung, vor.

Die erfindungsgemäß einsetzbaren (Meth)acrylsäureester-Copolymere enthalten bevorzugt 50 bis 80 Gew.-% Styrol und 20 bis 50 Gew.-% ein oder mehrere (Meth)acrylsäureester von Alkoholen mit 1 bis 18 C-Atomen, vorzugsweise Methylacrylat, Ethylacrylat, Propylacrylat, Butylacrylat, 2-Ethylhexylacrylat, gegebenenfalls im Gemisch mit Methacrylsäureester wie Methylmethacrylat, und 0 bis 10 Gew.-% ein oder mehrere ethylenisch ungesättigte, funktionelle Comonomere, wobei sich die Angaben in Gew.-% jeweils auf 100 Gew.-% addieren.

Ein Vergleich der Verträglichkeiten zwischen Polychloropren und (Meth)acrylsäureester-Copolymeren zeigt, dass insbesondere Styrol-(Meth)acrylsäureester-Copolymere mit Polychloropren verträglich sind und daher bevorzugt eingesetzt werden. Weiterhin kann die Viskosität der Styrol-(Meth)acrylsäureester-Copolymere und deren Glasübergangstemperatur (Tg) Einfluss auf die Klebekraft in Klebstoffformulierungen auf Basis von Polychloropren haben. Erfindungsgemäß bevorzugt sind daher Styrol-(Meth)acrylsäureester-Copolymere mit niedrigen Viskositäten, insbesondere im Bereich < 400 mPa*s, gemessen bei 250 1/s, 23 °C gemäß DIN EN ISO 3219-1994, und weiter bevorzugt mit einem Tg < 0°C. Sie erhöhen die Klebkraft in den Formulierungen und sind daher bevorzugt einzusetzen.

Das mindestens eine (Meth)acrylsäureester-Copolymer ist in der erfindungsgemäßen wässrigen Formulierung bevorzugt in einer Menge von 15 bis 30 Gew.-%, ganz besonders bevorzugt 18 bis 28 Gew.-%, jeweils bezogen auf nichtflüchtige Anteile der wässrigen Formulierung, enthalten.

Geeignete Styrol-(Meth)acrylsäureester-Copolymere b) gemäß der vorliegenden Erfindung sind beispielsweise kommerziell z.B. unter dem Handelsnamen Acronal^{®}, von der BASF Deutschland AG erhältlich.

### c) mikrofibrillierte Cellulose als Verdicker:

Die erfindungsgemäße wässrige Formulierung enthält des Weiteren mindestens eine mikrofibrillierte Cellulose als Verdicker.

Mikrofibrillierte Cellulose ist dem Fachmann an sich bekannt. Es ist im Allgemeinen eine natürliche Cellulose, bei der die Cellulosefasern durch wiederholten Durchgang durch einen Homogenisator zur Ausbildung von Fibrillen und Mikrofibrillen aufgeschlossen und zerfasert wurden. Mikrofibrillierte Cellulose ist durch einen sehr hohen Wasserrückhaltewert, einen hohen Grad an chemischer Zugänglichkeit und der Fähigkeit zur Bildung von stabilen Gelen in Wasser oder anderen polaren Lösungsmitteln gekennzeichnet. Geeignete mikrofibrillierte Cellulose kann zum Beispiel erhalten werden wie in EP 0 120 471 A2, WO 2015/180844 A1, EP 2 196 579 A1 oder WO 2011/095335 A1 offenbart. Anwendungsmöglichkeiten von mikrofibrillierter Cellulose werden beispielsweise in den Schriften US 4,341,807 und 4,378,381 genannt.

Erfindungsgemäß geeignete mikrofibrillierte Cellulose ist beispielsweise kommerziell erhältlich unter den Handelsnamen Exilva^{®} der Firma Borregaard, insbesondere mikrofibrillierte Cellulosen mit den Handelsnamen Exilva^{®} P01-V und Exilva^{®} F01-V.

Die mindestens eine mikrofibrillierte Cellulose ist in der erfindungsgemäßen wässrigen Formulierung bevorzugt in einer Menge von besonders bevorzugt 0,2 bis 3 Gew.-%, jeweils bezogen auf die nichtflüchtige Anteile der wässrigen Formulierung, enthalten.

Die erfindungsgemäß eingesetzte mikrofibrillierte Cellulose weist Fibrillen auf, deren Durchmesser 10 bis 100 nm beträgt. Die Messung erfolgt mit einem Rasterelekronenmikroskop (REM).

Neben der mikrofibrillierten Cellulose können gegebenenfalls weitere Verdicker vorliegen. Zusätzliche für die Verwendung gemäß der vorliegenden Erfindung bei Bedarf geeignete Verdicker sind zum Beispiel beschrieben in W. Heilen et al. "Additive für wässrige Lacksysteme, Vincentz-Verlag Hannover, ISBN 978-3-86630-845-9, Seite 61 ff. Geeignete Verdicker sind beispielsweise in Mengen von 0,01 bis 15 Gew.-%, bevorzugt 0,3 bis 5,0 Gew.-%, jeweils bezogen auf die nichtflüchtige Anteile der wässrigen Zusammensetzung enthalten. Bevorzugt sind geeignete Verdicker ausgewählt aus der Gruppe bestehend aus Polyacrylsäuren, wasserlöslichen Polyurethanen, Kieselsäuren, Cellulosederivaten wie polycarboxylierte Celluloseethern, nichtionische Celluloseethern Alginaten, Xanthanen, Polyvinylalkoholen und Mischungen davon,

Dadurch, dass erfindungsgemäß gegebenenfalls weitere Verdicker in der wässrigen Zusammensetzung vorhanden sind, können mehrere technische Vorteile erzielt. Beispielsweise wird die Viskosität erhöht, dadurch wird eine genauere Dosierung und geringeres Tropfen der wässrigen Zusammensetzung erreicht werden. Darüber hinaus wird eine konstantere Schichtdicke nach Auftrag der wässrigen Zusammensetzung auf das Substrat im Vergleich zu Zusammensetzungen, welche keine Verdicker enthalten, erreicht.

### d) gegebenenfalls vorliegende weitere Additive:

Die erfindungsgemäße wässrige Zusammensetzung kann gegebenenfalls Additive enthalten, in einer Menge von 0,1 bis 30 Gew.-%, bezogen auf nichtflüchtige Anteile der wässrigen Zusammensetzung.

Beispielsweise können Netzmittel, insbesondere Polyphosphate, wie Natriumhexametaphosphat, Naphthalinsulfonsäure, Ammonium- oder Natriumpolyacryl-Säuresalze, zugesetzt werden.

Ebenfalls geeignet sind Salze von Polyacrylsäuren, insbesondere Na-Salze von Polyacrylsäuren, wie beispielsweise kommerziell erhältlich unter dem Handelsnamen Dispex N40 von der BASF SE. Bevorzugt in einer Menge von 0,2 bis 0,6 Gew. -%, alle Angaben bezogen auf nichtflüchtige Anteile der wässrigen Zusammensetzung, zugesetzt werden. basiert.

Weiterhin können der wässrigen Zusammensetzung Flammschutzmittel zugesetzt werden, um die Brandsicherheit der daraus hergestellten Formkörper zu erhöhen. Als Flammschutzmittel seien beispielhaft genannt organische Phosphor- und Stickstoffverbindungen, Organochlor- und Organobrom-Verbindungen, sowie anorganische Flammschutzmittel wie z.B. Antimontrioxid, Aluminiumhydroxid oder Aluminiumoxid. Bevorzugt wird im Rahmen der vorliegenden Erfindung Aluminiumhydroxid als Flammschutzmittel in der wässrigen Zusammensetzung eingesetzt, besonders bevorzugt wird dabei Aluminiumhydroxid mit einer mittleren Partikelgröße d(50) im Bereich von 1,0 bis 3,9, insbesondere 1,7 - 2,1 µm eingesetzt. Flammschutzmittel werden in dem Fachmann bekannten Mengen eingesetzt, beispielsweise bis 30 Gew.-%, bevorzugt 0,1 bis 30 Gew.-%, besonders bevorzugt 1,5 bis 15 Gew.-%.

In weiteren, jedoch nicht bevorzugten Ausführungsformen können zur Konservierung auch Fungizide zugesetzt werden. Diese kommen bevorzugt in Mengen bis 1 Gew. -%, bevorzugt 0,02 bis 1 Gew.-%, bezogen auf nichtflüchtige Anteile, der wässrigen Zusammensetzung zum Einsatz. Geeignete Fungizide sind beispielsweise Phenol-und Kresolderivate oder zinnorganische Verbindungen.

Gegebenenfalls können auch klebrig machende Harze, wie z. B. unmodifizierte oder modifizierte Naturharze wie Kollophoniumester, Kohlenwasserstoffharze oder synthetische Harze wie Phthalatharze der erfindungsgemäßen Formulierung in dispergierter Form zugesetzt werden, siehe dazu z. B. "Klebharze" R. Jordan, R. Hinterwaldner, Seiten 75 bis 115, Hinterwaldner Verlag München 1994). Bevorzugt sind Alkylphenolharz- und Terpenphenolharz-Dispersionen mit Erweichungspunkten grösser 70 °C, besonders bevorzugt größer 110 °C.

Ebenfalls möglich ist ein Einsatz organischer Lösungsmittel, wie beispielsweise Toluol, Xylol, Butylacetat, Methylethylketon, Ethylacetat, Dioxan oder deren Gemische oder Weichmacher, wie beispielsweise solche auf Adipat-, Phthalat- oder Phosphatbasis, jeweils in Mengen von bevorzugt 0,5 bis 10 Gew.-Teile, bezogen auf nichtflüchtige Anteile der wässrigen Zusammensetzung.

Die wässrige Zusammensetzung der vorliegenden Erfindung kann auch bis 30 Gew.-%, bevorzugt 0,1 bis 30 Gew.-%, besonders bevorzugt 1,5 bis 15 Gew.-%, mindestens eines Pigments, bevorzugt ausgewählt aus Weißpigmenten, stärker bevorzugt ausgewählt aus der Gruppe bestehend aus Kreide, TiO₂, ZnO, MgO, Al(OH)₃ Al₂O₃ oder Mischungen davon enthalten.

Zinkoxid oder Magnesiumoxid können bevorzugt als Akzeptor für geringe Mengen von Chlorwasserstoff, der von den Chloroprenpolymerisaten abgespalten werden kann, verwendet werden und sind deshalb in bevorzugten Ausführungsformen zusätzlich enthalten. Diese werden bevorzugt in Mengen bis 10 Gew.-%, bevorzugt 0,1 bis 10 Gew.-%, besonders bevorzugt von 1 bis 5 Gew.-%, jeweils bezogen auf die nichtflüchtigen Anteile der wässrigen Zusammensetzung, zugesetzt und können in Gegenwart der Polychloropren-Dispersionen partiell hydrolisieren oder enthalten hydrolisierbare Anteile. Bevorzugt liegen die zugesetzten MgO und/oder ZnO als predispergierte Formulierungen beziehungsweise Pasten vor. Auf diese Weise kann die Viskosität der Formulierung angehoben und auf ein gewünschtes Niveau eingestellt werden.

Es können aber auch andere Stabilisatoren, wie z. B. Bleiglätte, oder Additive, die in Gegenwart alkalischer Polychloropren Dispersionen hydrolysieren, zugesetzt werden. Wird eine höhere Viskosität der erfindungsgemäßen wässrigen Zusammensetzung nicht gewünscht, so können ZnO- oder MgO-Zusätze entfallen, ohne dass die Lagerstabilität des Produktes negativ beeinflusst wird.

In bevorzugten Ausführungsformen ist das gegebenenfalls vorliegende, mindestens eine Additiv ausgewählt aus Pigmenten, Flammschutzmitteln, Antioxidantien, Dispergierhilfsmitteln, Emulgatoren, Netzmitteln, Haftvermittlern und Entschäumern.

Die erfindungsgemäße wässrige Formulierung kann des Weiteren als Additive übliche Alterungs-, Oxidations- und/oder UV-Schutzmittel enthalten, bevorzugt auf der Basis von oligofunktionellen sekundären aromatischen Aminen oder oligofunktionellen substituierten Phenolen, wie Produkte vom Typ 6-PPD (N-(1,3-Dimethylbutyl)-N'-phenyl-p-phenylendiamin, beispielsweise Vulkanox^{®} der Lanxess Deutschland GmbH, DTPD, DDA, BPH, BHT oder Verbindungen auf Basis von HALS (hindered amine light stabilisers), Benzotriazolen, Oxalaniliden, Hydroxybezophenonen und/oder Hydroxyphenyl-S-triazine. Besonders wirksam ist Rhenofit^{®} DDA 50 EM, ein DiphenylaminDerivat der Firma Rhein Chemie.

Typischerweise werden entsprechende Alterungs-, Oxidations- und/oder UV-Schutzmittel in emulgierter Form als wässrige Dispersion eingebracht. Alterungs-, Oxidations- und/oder UV-Schutzmittel können erfindungsgemäß in einer Menge bis 5 Gew.-Teilen, bevorzugt 0,1 bis 5 Gew.-%, besonders bevorzugt 1 bis 3 Gew.-Teilen, besonders bevorzugt 1,5 bis 2,5 Gew.-Teile, jeweils bezogen auf die vorhandene Menge an Polychloropren, vorliegen.

Die vorliegende Erfindung betrifft daher bevorzugt die erfindungsgemäße wässrige Formulierung, wobei
a) das mindestens eine Polychloropren zu mindestens 70 Gew.-%,
b) das mindestens eine (Meth)acrylsäureester-Copolymer zu 15 bis 30 Gew.-%, bevorzugt 18 bis 28 Gew.-%,
c) die mindestens eine mikrofibrillierter Cellulose zu 0,2 bis 3 Gew %, und
d) die gegebenenfalls vorliegenden Additive zu 0,1 bis 30 Gew.-%,
jeweils bezogen auf das Gesamtgewicht der nichtflüchtigen Anteile der Formulierung, vorliegen, und die Summe der vorliegenden Komponenten jeweils 100 Gew.-% ergibt.

Die erfindungsgemäße wässrige Formulierung ist bevorzugt durch spezielle rheologische Eigenschaften gekennzeichnet, insbesondere dadurch, dass sich im so genannten "Low-shear"-Bereich von 10/s bis 100/s die Viskosität gegenüber der Schergeschwindigkeit nur geringfügig ändert, d.h. im Wesentlichen proportional zur Schergeschwindigkeit verhält. Im Rahmen der vorliegenden Erfindung bedeutet eine geringfügige Änderung, dass sich in dem so genannten "Low-shear"-Bereich von 10/s bis 100/s die Viskosität um weniger als das 4,5 fache ändert.

Dieses bevorzugte Verhalten der erfindungsgemäßen wässrigen Formulierung führt zu einem leichteren Auftrag der Formulierung mit Pinsel, Walze oder Rakel, reduziert die Mischzeit bei der Herstellung der Formulierung und erleichtert das Fließen der erfindungsgemäßen Formulierung in den Leitungen der Sprühapparaturen.

Die erfindungsgemäße wässrige Formulierung weist bevorzugt einen pH-Wert von 8,2 bis 9,8, bevorzugt 8,5 bis 9,5, auf. Der pH-Wert der erfindungsgemäßen wässrigen Formulierung kann durch dem Fachmann bekannte, anorganische Säuren und/oder organische Säuren und/oder Aminosäuren und/oder deren Puffersysteme, insbesondere enthaltend entsprechende Na- und K-Salze, eingestellt werden. Bevorzugt wird Glycin eingesetzt.

Die erfindungsgemäße wässrige Formulierung weist bevorzugt eine Viskosität von 500 bis 7.000 mPa*s, besonders bevorzugt 1500 bis 6.000 mPa*s, jeweils bestimmt nach DIN ISO 2555 mittels eines Brookfield Rotationsviskosimeters, auf.

In der erfindungsgemäßen wässrigen Formulierung liegt das Mischungsverhältnis von mindestens einem (Meth)acrylsäureester-Copolymer zu der mindestens einen mikrofibrillierten Cellulose bevorzugt bei 2 : 1 bis 8 : 1, bevorzugt 3 : 1 bis 5 : 1, optimalerweise bei 4 : 1. In dieser Ausführungsform sind die Viskosität und die Lagerstabilität, beispielsweise nach 12 Monaten besonders vorteilhaft.

Die erfindungsgemäße wässrige Formulierung weist bevorzugt einen Feststoffanteil von 50 bis 60 Gew.-%, besonders bevorzugt 52 bis 57 Gew.-%, jeweils bezogen auf die gesamte Formulierung, auf.

Die vorliegende Erfindung betrifft auch das Verfahren zur Herstellung der erfindungsgemäßen wässrigen Formulierung, umfassend mindestens die Schritte:
(A) Bereitstellen der Komponenten a), b), c), gegebenenfalls d) und Wasser in den entsprechenden Mengen, und
(B) Vermischen der in Schritt (A) bereitgestellten Komponenten, um die wässrige Formulierung zu erhalten.

Zur Herstellung der erfindungsgemäßen wässrigen Formulierung werden die Mengenverhältnisse der einzelnen Komponenten so gewählt, dass die resultierende erfindungsgemäße Formulierung die Komponenten a), b), c) und gegebenenfalls d) in den vorangehend angegebenen Mengen enthält.

In einer bevorzugten Ausführungsform der vorliegenden Erfindung wird die erfindungsgemäße wässrige Formulierung hergestellt, indem eine mindestens ein Polychloropren enthaltende Dispersion mit mindestens einem (Meth)acrylsäureester-Copolymer und mindestens einer mikrofibrillierten Cellulose und gegebenenfalls weiteren Additiven, insbesondere den oben genannten Klebstoffhilfs- und Zusatzmitteln, vermischt werden.

Weiter bevorzugt werden das mindestens eine Polychloropren als wässrige Dispersion, das mindestens eine (Meth)acrylsäureester-Copolymer als wässrige Dispersion, die Klebstoffhilfs- und Zusatzmittel als wässrige Dispersion und die mindestens eine mikrofibrillierte Cellulose als Suspension, die in der wässrigen Dispersion des mindestens einen wässrigen (Meth)acrylsäureester-Dispersion vordispergiert wird, eingesetzt.

In einer weiteren bevorzugten Ausführungsform der vorliegenden Erfindung wird die erfindungsgemäße wässrige Formulierung hergestellt, indem eine mindestens ein Polychloropren enthaltende Dispersion vorgelegt wird und eine Mischung aus mindestens einer mikrofibrillierten Cellulose und mindestens einem (Meth)acrylsäureester-Copolymer zugegeben wird. Anschließend können gegebenenfalls weitere Additive, insbesondere die oben genannten Klebstoffhilfs- und Zusatzmittel, zugegeben werden.

Bevorzugt wird die Mischung aus mindestens einer mikrofibrillierten Cellulose und mindestens einem (Meth)acrylsäureester-Copolymer erhalten, indem die genannten Komponenten unter Scherkräften von 4 bis 66 m/s, besonders bevorzugt 28 bis 35 m/s, vermischt werden, insbesondere mit einem Statikmischer und/oder einem Dynamikmischer. Anschließend kann die so erhaltene Mischung in die mindestens ein Polychloropren enthaltende Dispersion eingemischt werden, wobei gegebenenfalls weitere Additive zugegeben werden.

Durch dieses besonders bevorzugte Verfahren zur Herstellung der Mischung enthaltend mindestens eine mikrofibrillierte Cellulose und mindestens ein (Meth)acrylsäureester-Copolymer wird bei der Herstellung der erfindungsgemäßen wässrigen Formulierung eine ähnliche Mischungsviskosität der erfindungsgemäßen wässrigen Formulierung bei einer bevorzugt geringeren Menge an mindestens einer mikrofibrillierten Cellulose erreicht.

Die Herstellung der erfindungsgemäßen wässrigen Formulierung, insbesondere die Herstellung der einzelnen Mischungen bzw. Dispersionen, kann im Allgemeinen bei allen dem Fachmann als geeignet erscheinenden Bedingungen erfolgen, beispielsweise bei einer Temperatur von 18 bis 28 °C, idealerweise bei Raumtemperatur (23°C), weiter bevorzugt in dem Fachmann bekannten Apparaturen, beispielweise in Edelstahl-, Glas- oder in emaillierten verfahrenstechnischen Apparaten. Es ist bei der Klebstoffherstellung auf Rostbildung und lösliche Metalllegierungen u.a. Aluminiumbehälter zu vermeiden.

Die vorliegende Erfindung betrifft auch eine Klebstoffzusammensetzung, mindestens enthaltend die erfindungsgemäße wässrige Formulierung, und gegebenenfalls weitere dem Fachmann an sich bekannte Additive, beispielsweise organische Säuren, insbesondere Glycin, beispielsweise zur Einstellung des pH-Werts. Weiterhin kann auch Harnstoff vorliegen, insbesondere zur Verbesserung der Kältestabilität.

Die vorliegende Erfindung betrifft des Weiteren auch das erfindungsgemäße Verfahren zur Herstellung einer Nass-in-Nass Verklebung von Substraten, wobei eine Klebstoffzusammensetzung enthaltend die erfindungsgemäße wässrige Formulierung auf ein Substrat appliziert wird und nach höchstens 5 min, bevorzugt höchstens 2 min, besonders bevorzugt höchstens 1 min, eine Nassklebung vor Filmbildung erfolgt.

Die erfindungsgemäße wässrige Formulierung kann dabei im Allgemeinen mittels aller gängigen Applikationsformen auf die Substrate aufgebracht werden, insbesondere durch Streichen, Rollen, Spritzen und/oder Sprühen, insbesondere durch Sprühauftrag, Pinselauftrag oder Walzenauftrag. Bevorzugt erfolgt der Auftrag der erfindungsgemäßen Klebstoffe mittels Sprühapplikation.

Erfindungsgemäß geeignete Substrate sind beispielsweise Holz, Papier, thermoplastische Kunststoffe, elastomere Kunststoffe, thermoplastisch-elastomere Kunststoffe, Vulkanisate, textile Gewebe, Gewirke, Geflechte, Leder, Metalle, Keramik, Asbestzement, Steinzeug, Beton, Schaumstoffe, jeweils miteinander und/oder an porige Substrate, bevorzugt mit einer Dichte von weniger als 1 kg/Liter.

Insbesondere betrifft die vorliegende Erfindung das erfindungsgemäße Verfahren zur Herstellung einer Nass-in-Nass Verklebung, wobei eine erfindungsgemäße Klebstoffzusammensetzung enthaltend die erfindungsgemäße wässrige Formulierung zum Beispiel mittels Sprühauftrag, Walzenauftrag oder Pinselauftrag auf ein Schaumstoff-Substrat appliziert wird und nach einer Ablüftungszeit von < 5 min, bevorzugt < 2 min, besonders bevorzugt ≤ 1 min eine Nassklebung vor Filmbildung erzeugt wird.

Die vorliegende Erfindung betrifft des Weiteren auch das erfindungsgemäße Verfahren zur Herstellung eines Verbundmaterials durch Verklebung der einzelnen Fügeteile des Verbundmaterials, wobei die erfindungsgemäß wässrige Formulierung eingesetzt wird.

Die vorliegende Erfindung betrifft auch die Verwendung der erfindungsgemäßen wässrigen Formulierung zur Verklebung von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zur Verklebung von Schaumstoffen in der Mattratzen-, Möbel- und/oder Polsterverklebung.

Die vorliegende Erfindung wird durch die folgenden Beispiele näher erläutert:

### Beispiele

Tabelle 1 zeigt die in den erfindungsgemäßen Beispielen und/oder Vergleichsbeispielen eingesetzten Inhaltsstoffe:

**Tabelle 1: Eingesetzte Komponenten**

| **Typ** | **Handelsname** | **Eigenschaften/Struktur** | **eingesetzte Form** |
|---|---|---|---|
| Polychloropren | Dispercoll^{®} C 84 | Wässrige kolloidale Dispersion eines 2-Chlorbutadien-Polymers mit hohem Kristallisationsgrad | wässrige Dispersion, 55 Gew.-% Feststoff |
| Acrylsäureester-Styrol-Copolymer | Acronal^{®} 3710 | Copolymer aus Styrol und (Meth)acrylsäureester, Viskosität 500 bis 1200 mPa*s, Tg 16°C | wässrige Dispersion, 47 bis 49 Gew.-% Feststoff |
| Acrylsäureester-Styrol-Copolymer | Acronal^{®} 5400 | Copolymer aus Styrol und (Meth)acrylsäureester, Viskosität 50 bis 350 mPa*s, Tg -10°C | wässrige Dispersion, 57 Gew.-% Feststoff |
| Kieselsol | Dispercoll^{®} S 4510 | Wässrige anionische kolloiddisperse Lösung von amorphem Siliziumdioxid, mittlere Teilchengröße ca. 30 nm | wässrige Dispersion, 45 Gew.-% Feststoff |
| mikrofibrillierte Cellulose | Exilva^{®} P01-V | durchschnittliche, hydrodynamische Länge ca. 70 µm, durchschnittliche Faserlänge 1 bis 1000 µm | wässrige Suspension, 10 Gew.-% Feststoff |
| Methylcellulose | Culminal^{®} 2000 S | nichtionischer Celluloseether | Feststoff |
| Alterungsschutzmittel | Rhenofit^{®} DDA-EM 50 | 50% Diphenylaminderivat | wässrige Dispersion, 50 Gew.-% Feststoff |
| Verdicker | Borchi^{®} Gel A LA | anionisch neutralisiertes Polyacrylat mit niedrigem Scherbereich, APEO- und Organozinnfrei, nicht flüchtiger Anteil 9 bis 11 Gew.-%, verdünnt auf eine wässrige Dispersion | wässrige Dispersion, 5 Gew.-% Feststoff |
| pH-Regulator | Glycin | Aminoessigsäure | Feststoff |

### Methoden/Messmethoden:

Folgende Methoden bzw. Messmethoden kamen bei den erfindungsgemäßen Beispielen und/oder Vergleichsbespielen zum Einsatz.

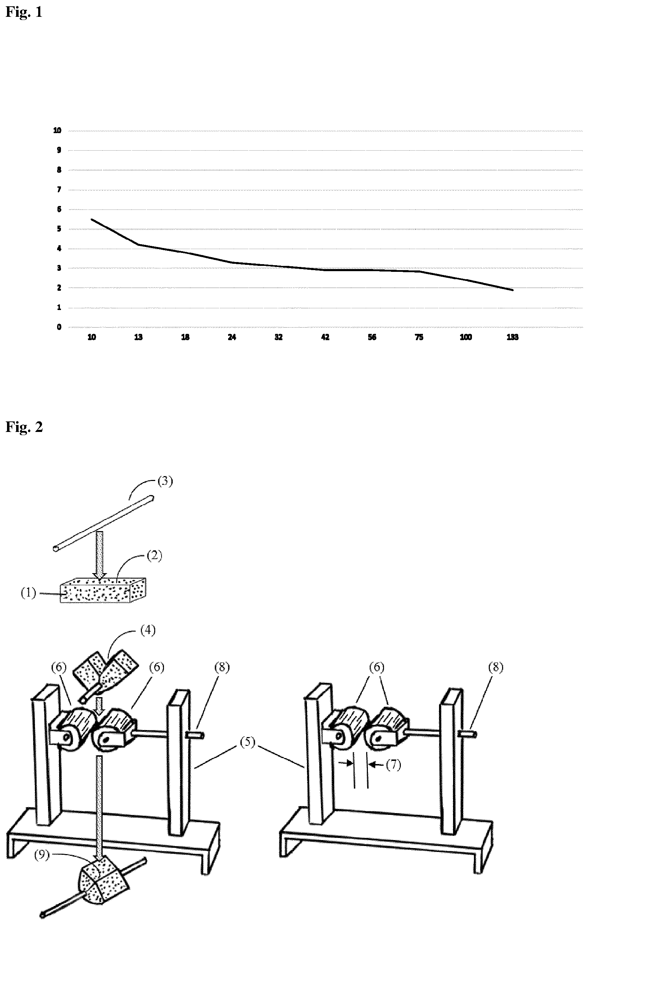

Auftrag der Klebstoffformulierung und Beurteilung
1) Sprühverfahren:
   Die Klebstoffformulierung wird mittels einer Sprühpistole (Walther PILOT PREMIUM ND, p = ca. 1,5 bar) mit einer Sprühdüse (Durchmesser ca. 1,0 mm) auf das Prüfmaterial appliziert.
2) Beschichtung mit dem Pinsel
   Die Klebstoffformulierung wird mittels Pinsel beidseitig auf den PU-Schaumkörper aufgetragen.
3) Prüfkörper
   Als Prüfmaterial werden PU-Schaumkörper wie folgt verwendet: Schaumqualität: stn/schaumstofftechnik-Nürnberg GmbH, Typ: ST 5540, Abmessung Prüfkörper: 101 × 49 × 30 mm, Materialbasis: PUR, Farbe: weiß, Bruttogewicht (in kg pro m²): 40, Nettorohdichte (in kg pro m³, nach ISO-845): 38, Stauchhärte (40%, in kPa, nach DIN EN ISO 3386): 5,5 Zugfestigkeit (in kpa, nach DIN EN ISO 1798): > 120, Bruchdehnung (in %, nach ISO-1798): > 110, Druckverformungsrest (50%/70°C/C22h, nach DIN EN ISO-1856): < 4
4) Bestimmung der Anfangsfestigkeit:
   Als Prüfmaterial werden (siehe Fig. 2) Prüfkörper wie unter 3) beschrieben verwendet. Zur Beurteilung der Anfangsfestigkeit werden die Prüfkörper unmittelbar nach dem Klebstoff-Auftrag auf die Oberseite (2) der Schaumstoffkörper (1) mittels Sprühkoagulationsverfahrens (Aufwandmenge 130 bis 150 g/m² nass) mit einem Holzstab (3) (Rundholz D = 7 mm oder Vierkant 7 x 7 mm)) in der Mitte geknickt (4) und mittels der Prüfvorrichtung (5) durch 2 Stahlrollen (6) (Durchmesser 40 mm, Länge 64 mm) geführt, deren tangentialer Abstand (7) zuvor mit einer Gewindespindel (8) auf 10 mm eingestellt wurde. Die Anfangsfestigkeit ist ausreichend, wenn der Probekörper bzw. die Klebnaht (9) sich trotz der im Probekörper vorhandenen Rückstellkräfte nicht öffnet.
5) Beurteilung der Anfangsfestigkeit
   Die erwartete sofortige Anfangsfestigkeit ist vorhanden, wenn der Prüfkörper bzw. die Klebenaht (9) sich trotz der im Probekörper vorhandenen Rückstellkräfte nicht mehr öffnet. Zur besseren Quantifizierung der Anfangsfestigkeit wird diese wie folgt bewertet:
   sehr gut (1):
      Die Spannung wird nach einmaligem Durchziehen des Prüfkörpers durch den Spalt zwischen den beiden Walzen sofort gehalten. Wird der Schaumkörper nach 120 sek beidseitig auseinandergezogen, erfolgt Materialausriss, bzw. der Schaumkörper lässt sich nur mit sehr hohem Kraftaufwand wieder öffnen.
   gut (2):
      Die Spannung wird nach einmaligem Durchziehen des Prüfkörpers durch den Spalt zwischen den beiden Walzen sofort gehalten, und der Schaumkörper lässt sich nach 120 sek bei beidseitigem Auseinanderziehens ohne hohen Kraftaufwand wieder öffnen.
   befriedigend (3):
      Der Prüfkörper öffnet sich nach einmaligem Durchziehen des Prüfkörpers durch den Spalt zwischen den beiden Walzen. Erst durch Wiederholung bzw. per Handdruck (1x ca. 1s angedrückt) bleibt der Prüfkörper geschlossen.
   Schlecht (4):
      Die Spannung wird selbst bei mehrmaligem Andrücken (Walzenverfahren und per Hand gepresst) nicht gehalten.
6) Bestimmung der Viskosität:
   Die Viskosität der Dispersionen wird mittels Brookfield Viskosimeter nach DIN ISO 2555 ermittelt. Die Spindel wird dabei vorsichtig, möglichst ohne Luftblasenbildung. in die zu messende Dispersion eingetaucht. Dazu wird die Probenflasche auf eine Hebebühne gestellt und vorerst soweit hochgefahren, dass die Spindel an der Antriebsachse befestigt werden kann, ohne dass der Spindelkörper aus der Dispersion auftaucht. Die Hebebühne wird weiter hochgefahren, bis die Spindel bis zur Eintauchrille am Spindelschaft in die Probe eintaucht. Der Motor wird eingeschaltet. Sobald sich die LED-Anzeige des Messwertes stabilisiert hat, wird der Messwert abgelesen.
   Je nach Viskositätsbereich wird mit folgt verfahren:
      Viskositätsbereich < 1.000 mPa*s, Messung mit Spindel LV-2 (62) bei 60 U/min.
      Viskositätsbereich 1.000 bis 2.500 mPa*s, Messung mit Spindel LV-2 (62) bei 12 U/min.
      Viskositätsbereich 2.500 bis 10.000 mPa*s, Messung mit Spindel LV-3 (63) bei 12 U/min.
7) Bestimmung des pH Wertes:
   In die zu prüfende Dispersion bzw. Lösung wird eine Einstab-Messelektrode, z. B. Metrohm pH Meter, eingetaucht.
8) Dispergieren von Mischungen aus fibrillierter Cellulose und Acrylsäureester-Copolymer:
   In einer Weißblechdose werden 250 g der fibrillierten Cellulose (Exilva^{®} P01-V) eingewogen, anschließend werden 625 g (Meth)acrylsäureester-Copolymer (Acronal^{®} 5400) hinzugegeben. Die Dispergierung erfolgt mittels Dispermat AE 3M und einer große Dissolverscheibe bei25 m/s für 15 Minuten. Die Versuche wurden mit einer Geschwindigkeit von 5 bis 30 m/s in Schritten von 5m/s durchgeführt.
9) Bestimmung der rheologischen Eigenschaften:
   Die Proben wurden nach DIN EN ISO Norm 3219 mit einem MCR302-Rotationsrheometer der Firma Anton Paar untersucht. Es wurde das koaxiales Zylindersystem CC27 (Messzylinder aus Stahl mit einem Durchmesser von 26,6 mm und Becher aus Stahl mit einem Durchmesser von 28,9 mm) mit der Peltierheizung C-PTD200 eingesetzt. Der Messzylinder diente als Rotor und der Becher als Stator. Die Fließkurve, d.h. die gemessene Viskosität in Abhängigkeit der Schergeschwindigkeit wurde bei 23 °C anfangend bei der Schergeschwindigkeit 0,1 1/s in 33 Zeitschritten von jeweils 5 s bis 1000 1/s gemessen.

### Herstellung der Klebstoffformulierungen:

Die Versuche V9 bis V15 und V17 wurden jeweils in einem 900 ml aus Polypropylen bestehender Kunststoffbecher, mit Dissolverscheibe und einer Rührgeschwindigkeit von 600 U/Min. (2,2m/s) und einer Rührzeit von 15 Minuten hergestellt. Dispercoll^{®} C 84 und Rhenofit^{®} DDA-EM wurden unter Rühren gemischt, danach wurden unter Rühren die Acronal^{®} 5400 oder 3700 und Exilva^{®} P01-V entweder einzeln oder als vorgefertigte Mischung zugegeben. Nach einer Rührzeit von 15 Minuten wurden der pH-Wert und die Viskosität gemessen. Die Viskosität wurde je nach Viskositätsgröße wie unter Punkt 8 mit der Spindel LV-2 (62) bzw. LV-3 (63) bei 12 Umdrehungen in der Minute gemessen. Es wurden jeweils der höchste Sofortwert und der ca. 15 Sekunden anhaltende Viskositätswert dokumentiert. Nachdem der pH-Wert und Viskosität ermittelt wurden, wird die Dissolverscheibe durch einen Propellerrührer (35 mm) ersetzt, und es wurde unter Rühren Glycin zugefügt, bis sich ein pH-Wert von 9,0 eingestellt hat. Bei der pH-Wert Einstellung mit Glycin betrug die Rührgeschwindigkeit 600 U/Min. Die Viskosität bei pH 9,0 wird wie unter Punkt 8 beschrieben mit der Spindel LV-2 (62) bzw. LV-3 (63) bei 12 Umdrehungen in der Minute gemessen. Es wurden jeweils der höchste Sofortwert und der ca. 15 Sekunden anhaltende Viskositätswert dokumentiert.

### Ermittlung der Langzeitlagerstabilität:

Die Viskosität von wasserbasierenden Klebstoffformulierungen, die im Bereich Sprühapplikation eingesetzt wurden, lag üblicherweise im Bereich von 200 bis 5000 mPa*s (Zielviskosität).

**Tabelle 2: Dispersionen**

| **Beispiel** | **V1** | **V2** | **3** | **V4** | **V5** | **V6** | **V7** | **V8** |
|---|---|---|---|---|---|---|---|---|
| **Dispercoll C 84** | 73,1 | 72,4 | 72,6 | 72,6 | 75,8 | 75,3 | 75,3 | 75,5 |
| **Rhenofit DDA-50 EM** | 1,5 | 1,5 | 1,5 | 1,5 | 1,5 | 1,5 | 1,5 | 1,5 |
| **Acronal 5400** | 21,9 | 21,8 | 21,8 | 21,8 | 19 | 18,8 | 18,8 | 18,8 |
| **Exilva P01-V** | 0 | 1,5 | 0,9 | 0,8 | 0 | 1,3 | 0,9 | 0,7 |
| **Glycin** | 3,5 | 2,8 | 3,2 | 3,3 | 3,7 | 3,1 | 3,5 | 3,5 |
| **Acronal^{®} 5400/Exilva^{®} P01-V** | - | 2,5:1 | 3,8:1 | 4,7:1 | - | 2,5:1 | 3,8:1 | 4,4:1 |
| **Summe** | 100 | 100 | 100 | 100 | 100 | 100 | 100 | 100 |

| | | | | | | | | |
|---|---|---|---|---|---|---|---|---|
| Alle Angaben in Gew.-%, jeweils bezogen auf den Feststoff V bedeutet Vergleichsversuch | | | | | | | | |

**Tabelle 3: Viskositäten und pH-Werte**

| **Beispiel** | **V1** | **V2** | **3** | **V4** | **V5** | **V6** | **V7** | **V8** |
|---|---|---|---|---|---|---|---|---|
| **Ausgangs-pH-Wert** | 9,1 | 9,2 | 9,2 | 9,1 | 9,1 | 9,1 | 9,2 | 9,1 |
| **Ausgangsviskosität [mPa*s]** | 124 | 6880 | 3690 | 2570 | 111 | 5590 | 3114 | 2220 |
| **pH-Wert nach 12 Monaten** | koag | 8,4 | 8,6 | 8,5 | koag | 8,4 | 8,4 | 8,5 |
| **Viskosität nach 12 Monaten [mPa*s]** | | | | | | | | |
| **oben** | n.b. | 9350 | 5040 | 7060 | n.b. | 9940 | 7250 | 6130 |
| **Mitte** | n.b. | 9350 | 4830 | 5030 | n.b. | 4910 | 4330 | 4330 |
| **unten** | n.b. | 9350 | 4780 | 4830 | n.b. | 5780 | 2940 | 3420 |

| | | | | | | | | |
|---|---|---|---|---|---|---|---|---|
| V bedeutet Vergleichsversuch koag bedeutet kaoguliert n.b. bedeutet nicht bestimmt | | | | | | | | |

**Tabelle 4: Vergleich der erfindungsgemäßen Formulierungen mit dem Stand der Technik**

| Beispiel | V9 | V10 | V11 | 12 | V13 | V14 | V15 | 16 | V17 |
|---|---|---|---|---|---|---|---|---|---|
| Dispercoll^{®} C 84 | 76,3 | 74,3 | 73,3 | 73,2 | 76,8 | 75,9 | 92,9 | 73,5 | 74,3 |
| Rhenofit^{®} DDA-50 EM | 1,5 | 1,5 | 1,5 | 1,5 | 1,5 | 1,5 | 1,9 | 1,5 | 1,5 |
| Acronal^{®} 3710 | 19,1 | - | - | - | - | - | - | - | - |
| Acronal^{®} 5400 | - | 21,2 | 20,9 | 20,9 | - | - | - | - | - |
| Dispercoll^{®} S 4510 | - | - | - | - | 19,2 | - | - | - | - |
| Borchigel^{®} ALA/Wasser 1:1 | - | - | 1,4 | - | - | - | - | - | - |
| Dispercoll^{®} S 4510/Exilva^{®} P01-V | - | - | - | - | - | 19,6 | - | - | - |
| Exilva^{®} P01-V | - | - | - | 1,5 | - | - | 1,5 | - | - |
| Exilva^{®} P01-V/Acronal^{®} 5400 | - | - | - | - | - | - | - | 22,1 | - |
| Acronal^{®} 5400/ Culminal^{®} MC 2000 S | - | - | - | - | - | - | - | - | 21,2 |
| Glycin | 3,1 | 3,0 | 2,9 | 2,9 | 2,4 | 3,0 | 3,7 | 2,9 | 3,0 |
| gesamt | 100 | 100 | 100 | 100 | 100 | 100 | 100 | 100 | 100 |

| | | | | | | | | | |
|---|---|---|---|---|---|---|---|---|---|
| V bedeutet Vergleichsversuch Alle Angaben in Gew.-%, jeweils bezogen auf den Feststoff | | | | | | | | | |

**Tabelle 5: Viskositäten und pH-Werte**

| Beispiel | V9 | V10 | V11 | 12 | V13 | V14 | V15 | 16 | V17 |
|---|---|---|---|---|---|---|---|---|---|
| Ausgangs-pH-Wert | 9,0 | 9,0 | 9,0 | 9,0 | 9,0 | 9,0 | 9,0 | 9,0 | 9,0 |
| Ausgangs-Viskosität [mPa*s] | 3370 | 87 | 1300 | 3800 | 29 | 3540 | 3500 | 2700 | 4500 |
| Anfangsfestigkeit | 2 | 1 | 1 | 1 | 1 | 2 | 1 | 1 | 3 |
| pH-Wert nach 1 Woche | 8,9 | 8,9 | 8,9 | 9,0 | 8,9 | 8,9 | 8,9 | 8,9 | 8,9 |
| Viskosität nach 1 Woche [mPa*s] | 3520 | 90 | 1650 | 4250 | 29 | 3720 | 3500 | 3410 | 11300 |
| pH-Wert nach 3,5 Monaten | 8,9 | 8,8 | 2 Phasen | 8,8 | koag | 8,7 | 8,8 | 8,8 | 8,9 |
| Viskosität nach 3,5 Monaten [mPa*s] | 3420 | 150 | 2 Phasen | 4300 | koag | 4400 Stippen | 3700 | 2940 | koag |
| Anfangsfestigkeit | 2 | 1 | - | 1 | - | 2 | 2 | 1 | n.b. |
| pH-Wert nach 5 Monaten | 8,9 | koag | koag | 8,7 | koag | koag | koag | 8,7 | n.b. |
| Viskosität nach 5 Monaten [mPa*s] | 3900 | n.b. | n.b. | 4320 | n.b. | n.b. | n.b. | 2950 | n.b. |
| Anfangsfestigkeit | 2 | n.b. | n.b. | 1 | n.b. | n.b. | n.b. | 1 | n.b. |

| | | | | | | | | | |
|---|---|---|---|---|---|---|---|---|---|
| V bedeutet Vergleichsversuch koag bedeutet kaoguliert n.b. bedeutet nicht bestimmt | | | | | | | | | |

### Beispiel 9:

In dieser Standardformulierung erfolgt die Verdickung durch ein hochviskoses (Meth)acrylsäureester-Copolymer (Acronal^{®} 3710). Obwohl Viskositätsbereich und Lagerstabilität ausreichen, ist die gewünschte hohe Anfangsfestigkeit der Klebung nicht vorhanden.

### Beispiel 10:

Der Ersatz des hochviskosen (Meth)acrylsäureester-Copolymers (Acronal^{®} 3710) durch ein niedrigviskoses (Meth)acrylsäureester-Copolymer (Acronal^{®} 5400) verbessert die Anfangsfestigkeit der Klebung deutlich, jedoch ist die Viskosität zu niedrig und die Lagerstabilität begrenzt (Koagulation nach 5 Monaten).

### Beispiel 11:

Der Zusatz eines Standardverdickers (Polyacrylat Borchigel^{®} ALA) zum niedrigviskosen (Meth)acrylsäureester-Copolymer (Acronal^{®} 5400) erhöht die Viskosität der Formulierung bei guter Anfangsfestigkeit der Klebung, jedoch ist die Lagerstabilität begrenzt (Entmischung nach 3,5 Monaten Lagerzeit und anschließende Koagulation)

### Beispiel 12 (erfindungsgemäß)

Der Zusatz von Exilva ^{®} P01-V zum niedrigviskosen (Meth)acrylsäureester-Copolymer (Acronal^{®} 5400) erhöht die Viskosität der Formulierung bei guter Anfangsfestigkeit der Klebung. Die Lagerstabilität ist ausgezeichnet, und die Viskosität der Formulierung bleibt über 5 Monaten Lagerzeit trotz Erniedrigung des pH-Wertes während der Lagerung konstant.

### Beispiel 13:

Der Ersatz des niedrigviskosen (Meth)acrylsäureester-Copolymers (Acronal^{®} 5400) durch ein Kieselsol (Dispercoll^{®} S 4510) führt zu einer niedrigviskosen, lagerinstabilen Formulierung.

### Beispiel 14:

Der Ersatz des niedrigviskosen (Meth)acrylsäureester-Copolymers (Acronal^{®} 5400) durch eine Mischung aus Kieselsol (Dispercoll^{®} S 4510) und Exilva^{®} P01-V führt zwar zu einer annehmbaren Viskosität bei niedriger Anfangsfestigkeit der Klebung, die Lagerzeit ist jedoch durch Stippenbildung und Koagulation begrenzt.

### Beispiel 15:

Der Ersatz des niedrigviskosen (Meth)acrylsäureester-Copolymers (Acronal^{®} 5400) durch Exilva^{®} P01-V führt zu einer annehmbaren Viskosität bei guter Anfangsfestigkeit der Klebung, die Lagerzeit ist jedoch durch Koagulation begrenzt.

### Beispiel 16 (erfindungsgemäß):

Wird entsprechend Beispiel 12 Exilva^{®} P01-V und niedrigviskoses (Meth)acrylsäureester-Copolymer (Acronal^{®} 5400) vor der Zugabe unter hoher Scherung gemischt und als Mischung zugesetzt, dann erhält man die gewünschte Viskosität der Formulierung schon bei einem niedrigeren Anteil an Exilva^{®} P01-V. Bei sehr guter Anfangsfestigkeit der Klebung bleibt die Lagerstabilität und die Viskosität der Formulierung über 5 Monaten Lagerzeit trotz Erniedrigung des pH-Wertes während

### Beispiel 17:

Der Ersatz von der mikrofibrillierte Cellulose (Exilva^{®} P01-V) auf eine handelsüblichen Methylcellulose (Culminal^{®} 2000 S) ergab eine nicht lagerstabile Klebstoffmischung, die nach einer Woche Lagerung in der Viskosität stark anstieg und sogar nach 3,5 Monaten koagulierte. Lagerung konstant.

### Bestimmung der rheologischen Eigenschaften

In einem Dissolver Dispermat CD wird Exilva^{®} P01-V in einem rostfreien Metallbecher (Höhe 180 mm, Durchmesser 120 mm) mit einer Dispergierscheibe (Durchmesser 80 mm) versehen vorgelegt und anschließend Acronal^{®} 5400 hinzugeben. Das Verhältnis von Acronal^{®} 5400 zu Exilva^{®} P beträgt 80 zu 20 in der Mischung. Die beiden Einzelkomponenten wurden 15 min bei unterschiedlicher Scherung gemischt

**Tabelle 6: Bestimmung der rheologischen Eigenschaften**

| Beispiel | V18 | V19 | V20 | V21 | V22 | V23 | 24 |
|---|---|---|---|---|---|---|---|
| Dispercoll^{®} C 84 | 76,5 | 76,5 | 76,5 | 76,5 | 76,5 | 76,5 | 76,5 |
| Rhenofit^{®} DDA-50 EM | 1,5 | 1,5 | 1,5 | 1,5 | 1,5 | 1,5 | 1,5 |
| Exilva^{®} P01-V/Acronal^{®} 5400 | 19,8 | 19,8 | 19,8 | 19,8 | 19,8 | 19,8 | 19,8 |
| Herstellung der Mischung unter Scherung (m/s) | 4,4 | 5 | 10 | 15 | 20 | 25 | 30 |
| Glycin | 2,2 | 2,2 | 2,2 | 2,2 | 2,2 | 2,2 | 2,2 |
| pH-Wert nach Zugabe von Glycin | 9,0 | 9,0 | 9,0 | 9,0 | 9,0 | 9,0 | 9,0 |
| pH-Wert nach 7 Tagen | 9,0 | 9,0 | 9,1 | 9,0 | 9,0 | 9,0 | 9,1 |
| Ausgangs-Viskosität [mPa*s] | 2070 | 1890 | 2040 | 1950 | 2170 | 2400 | 2420 |
| Viskosität nach 7 Tagen [mPa*s] | 1580 | 2400 | 2590 | 2220 | 2500 | 2740 | 2440 |
| Viskosität nach 21 Tagen [mPa*s] | 1420 | 1940 | 2400 | 2100 | 2350 | 3510 | 2330 |

Alle Formulierungen liegen unabhängig von der Vorbehandlung im gleichen Viskositätsbereich und sind lagerstabil. Alle Formulierungen zeigen ein pseudoplastisches Verhalten, bis auf den "Low shear" Bereich um 10/s bis 100/s, in dem sich die Viskosität gegenüber der Schergeschwindigkeit nur geringfügig ändert.

In Figur 1 ist auf der y-Achse die Viskosität in mPa*s und auf der x-Achse die Scherrate in 1/s aufgetragen. Wie Figur 1 beispielhaft an der Formulierung gemäß Beispiel 24 gezeigt, ändert sich die Scherspannung gegenüber der Schergeschwindigkeit bei dem erfindungsgemäßen Beispiel 24 in diesem Bereich nur geringfügig. Dieses Verhalten der erfindungsgemäßen Dispersion führt zu einem leichteren Auftrag der Formulierung mit Pinsel, Walze oder Rakel, verringert das Tropfen und Durchhängen der applizierten Formulierung (sagging), reduziert die Mischzeit bei der Herstellung der Formulierung und erleichtert das Fließen der erfindungsgemäßen Formulierung in den Leitungen der Sprühapparaturen.

## Patentansprüche

1. Wässrige Formulierung enthaltend
a) mindestens ein Polychloropren,
b) mindestens ein (Meth)acrylsäureester-Copolymer,
c) mindestens eine mikrofibrillierte Cellulose als Verdicker, und
d) gegebenenfalls weitere Additive,
wobei
a) das mindestens eine Polychloropren zu mindestens 65 Gew.-%,
b) das mindestens eine (Meth)acrylsäureester-Copolymer zu 12 bis 35 Gew.-%,
c) die mindestens eine mikrofibrillierter Cellulose zu 0,05 bis 5 Gew %, und
d) die gegebenenfalls vorliegenden Additive zu 0,1 bis 30 Gew.-%,
jeweils bezogen auf das Gesamtgewicht der nichtflüchtigen Anteile der Formulierung, vorliegen, und die Summe der vorliegenden Komponenten jeweils 100 Gew.-% ergibt, wobei die mikrofibrillierte Cellulose Fibrillen mit einem Durchmesser 10 bis 100 nm aufweist, bestimmt mit einem Rasterelekronenmikroskop.

2. Formulierung nach Anspruch 1, **dadurch gekennzeichnet, dass** das mindestens eine Polychloropren in Partikeln mit einer mittleren Teilchengröße von 30 bis 500 nm vorliegt und bevorzugt einen Restmonomer-Gehalt von weniger als 100 ppm aufweist.

3. Formulierung nach Anspruch 1 oder 2, **dadurch gekennzeichnet, dass** das mindestens eine (Meth)acrylsäureester-Copolymer mindestens ein Styrol-(Meth)acrylsäureester-Copolymer ist.

4. Formulierung nach einem der Ansprüche 1 bis 3, **dadurch gekennzeichnet, dass**
a) das mindestens eine Polychloropren zu mindestens 70 Gew.-%,
b) das mindestens eine (Meth)acrylsäureester-Copolymer zu 15 bis 30 Gew.-%, bevorzugt 18 bis 28 Gew.-%,
c) die mindestens eine mikrofibrillierter Cellulose zu 0,2 bis 3 Gew %, und
d) die gegebenenfalls vorliegenden Additive zu 0,1 bis 30 Gew.-%,
jeweils bezogen auf das Gesamtgewicht der nichtflüchtigen Anteile der Formulierung, vorliegen, und die Summe der vorliegenden Komponenten jeweils 100 Gew.-% ergibt.

5. Formulierung nach einem der Ansprüche 1 bis 4, **dadurch gekennzeichnet, dass** das mindestens eine Polychloropen bis 10 Gew.-%, bezogen auf das Gesamtgewicht des mindestens einen Polychloroprens, 2,3-Dichlorbutadien als Comonomer aufweist.

6. Formulierung nach einem der Ansprüche 1 bis 5, **dadurch gekennzeichnet, dass** das mindestens eine (Meth)Acrylsäureester-Copolymer eine Viskosität von ≤ 400 mPas, gemessen bei 250 1/s, 23 °C gemäß DIN EN ISO 3219-1994, aufweist.

7. Formulierung nach einem der Ansprüche 1 bis 6, **dadurch gekennzeichnet, dass** die Fibrillen der mindestens einen mikrofibrillierten Cellulose einen Durchmesser von 10 bis 100 nm aufweisen.

8. Formulierung nach einem der Ansprüche 1 bis 7, **dadurch gekennzeichnet, dass** sie eine Viskosität von 500 bis 7.000 mPa*s, bevorzugt 1500 bis 6.000 mPa*s, jeweils bestimmt nach DIN ISO 2555 mittels eines Brookfield Rotationsviskosimeters, aufweist.

9. Verfahren zur Herstellung einer wässrigen Formulierung gemäß einem der Ansprüche 1 bis 8, umfassend mindestens die Schritte:
(A) Bereitstellen der Komponenten a), b), c), gegebenenfalls d) und Wasser in den entsprechenden Mengen, und
(B) Vermischen der in Schritt (A) bereitgestellten Komponenten, um die wässrige Formulierung zu erhalten.

10. Verfahren gemäß Anspruch 9, **dadurch gekennzeichnet, dass** eine mindestens ein Polychloropren enthaltende Dispersion vorgelegt wird und eine Mischung aus mindestens einer mikrofibrillierten Cellulose und mindestens einem (Meth)acrylsäureester-Copolymer zugegeben wird.

11. Verfahren nach Anspruch 10, **dadurch gekennzeichnet, dass** die Mischung aus mindestens einer mikrofibrillierten Cellulose und mindestens einem (Meth)acrylsäureester-Copolymer erhalten wird, indem die genannten Komponenten unter Scherkräften von 4 bis 66 m/s, bevorzugt 28 bis 35 m/s, vermischt werden, insbesondere mit einem Statikmischer und/oder Dynamikmischer.

12. Verfahren gemäß einem der Ansprüche 9 bis 11, **dadurch gekennzeichnet, dass** die Herstellung in einem kontinuierlichen Verfahren oder in einem diskontinuierlichen Verfahren erfolgt.

13. Verfahren zur Herstellung einer Nass-in-Nass Verklebung von Substraten, **dadurch gekennzeichnet, dass** eine Klebstoffzusammensetzung enthaltend die wässrige Formulierung gemäß einem der Ansprüche 1 bis 8 auf ein Substrat appliziert wird und nach höchstens 5 min, bevorzugt höchstens 2 min, besonders bevorzugt höchstens 1 min, eine Nassklebung vor Filmbildung erfolgt.

14. Verfahren zur Herstellung eines Verbundmaterials, durch Verklebung der einzelnen Fügeteile des Verbundmaterials, **dadurch gekennzeichnet, dass** die wässrige Formulierungen gemäß einem der Ansprüche 1 bis 8 eingesetzt wird.

15. Verwendung der wässrigen Formulierung gemäß einem der Ansprüche 1 bis 8 zur Verklebung von Holz, Papier, thermoplastischen Kunststoffen, elastomeren Kunststoffen, thermoplastisch-elastomeren Kunststoffen, Vulkanisaten, textilen Geweben, Gewirken, Geflechten, Leder, Metallen, Keramik, Asbestzement, Steinzeug, Beton, Schaumstoffen, jeweils miteinander und/oder an porige Substrate, bevorzugt mit einer Dichte von weniger als 1 kg/Liter, insbesondere zur Verklebung von Schaumstoffen in der Mattratzen-, Möbel- und/oder Polsterverklebung.

## Claims

1. Aqueous formulation comprising
a) at least one polychloroprene,
b) at least one (meth)acrylic ester copolymer,
c) at least one microfibrillated cellulose as thickener, and
d) optionally further additives,
wherein
a) the at least one polychloroprene is present at at least 65 wt%,
b) the at least one (meth)acrylic ester copolymer is present at 12 to 35 wt%,
c) the at least one microfibrillated cellulose is present at 0.05 to 5 wt%, and
d) the additives optionally present are present at 0.1 to 30 wt%,
based in each case on the total weight of the non-volatile fractions of the formulation, and the sum total of the components present makes 100 wt% in each case, wherein the microfibrillated cellulose has fibrils with a diameter of 10 to 100 nm, determined with a scanning electron microscope.

2. Formulation according to Claim 1, **characterized in that** the at least one polychloroprene is present in particles with a mean particle size of 30 to 500 nm and preferably has a residual monomer content of less than 100 ppm.

3. Formulation according to Claim 1 or 2, **characterized in that** the at least one (meth)acrylic ester copolymer is at least one styrene-(meth)acrylic ester copolymer.

4. Formulation according to any of Claims 1 to 3, **characterized in that**
a) the at least one polychloroprene is present at at least 70 wt%,
b) the at least one (meth)acrylic ester copolymer is present at 15 to 30 wt%, preferably 18 to 28 wt%,
c) the at least one microfibrillated cellulose is present at 0.2 to 3 wt%, and
d) the additives optionally present are present at 0.1 to 30 wt%,
based in each case on the total weight of the non-volatile fractions of the formulation, and the sum of the components present makes 100 wt% in each case.

5. Formulation according to any of Claims 1 to 4, **characterized in that** the at least one polychloroprene has up to 10 wt%, based on the total weight of the at least one polychloroprene, of 2,3-dichlorobutadiene as comonomer.

6. Formulation according to any of Claims 1 to 5, **characterized in that** the at least one (meth)acrylic ester copolymer has a viscosity of ≤ 400 mPas, measured at 250 1/s, 23°C according to DIN EN ISO 3219-1994.

7. Formulation according to any of Claims 1 to 6, **characterized in that** the fibrils of the at least one microfibrillated cellulose have a diameter of 10 to 100 nm.

8. Formulation according to any of Claims 1 to 7, **characterized in that** it has a viscosity of 500 to 7000 mPa*s, preferably 1500 to 6000 mPa*s, determined in each case according to DIN ISO 2555 by means of a Brookfield rotational viscometer.

9. Method for producing an aqueous formulation according to any of Claims 1 to 8, comprising at least the steps of:
(A) providing the components a), b), c), optionally d) and water in the corresponding amounts, and
(B) mixing the components provided in step (A) to give the aqueous formulation.

10. Method according to Claim 9, **characterized in that** a dispersion comprising at least one polychloroprene is introduced and a mixture of at least one microfibrillated cellulose and at least one (meth)acrylic ester copolymer is added.

11. Method according to Claim 10, **characterized in that** the mixture of at least one microfibrillated cellulose and at least one (meth)acrylic ester copolymer is obtained by mixing the stated components under shearing forces of 4 to 66 m/s, preferably 28 to 35 m/s, in particular with a static mixer and/or dynamic mixer.

12. Method according to any of Claims 9 to 11, **characterized in that** production takes place in a continuous method or in a discontinuous method.

13. Method for producing a wet-on-wet bond between substrates, **characterized in that** an adhesive composition comprising the aqueous formulation according to any of Claims 1 to 8 is applied to a substrate and after at most 5 min, preferably at most 2 min, more preferably at most 1 min, wet bonding takes place before film formation.

14. Method for producing a composite material, by bonding the individual adherends of the composite material, **characterized in that** the aqueous formulation according to any of Claims 1 to 8 is used.

15. Use of the aqueous formulation according to any of Claims 1 to 8 for bonding wood, paper, thermoplastics, elastomeric plastics, thermoplastic-elastomeric plastics, vulcanizates, textile woven, knitted and/or braided fabrics, leather, metals, ceramic, asbestos cement, stoneware, concrete, foams, in each case to one another and/or to porous substrates, preferably with a density of less than 1 kg/litre, more particularly for bonding foams in mattress, furniture and/or upholstery bonding.

## Revendications

1. Formulation aqueuse contenant
a) au moins un polychloroprène,
b) au moins un copolymère d'ester de l'acide (méth)acrylique,
c) au moins une cellulose microfibrillée en tant qu'épaississant et
d) le cas échéant d'autres additifs,
dans laquelle
a) ledit au moins un polychloroprène est présent à raison d'au moins 65 % en poids,
b) ledit au moins un copolymère d'ester de l'acide (méth)acrylique est présent à raison de 12 à 35 % en poids,
c) ladite au moins une cellulose microfibrillée est présente à raison de 0,05 à 5 % en poids et
d) lesdits additifs le cas échéant présents sont présents à raison de 0,1 à 30 % en poids,
à chaque fois par rapport au poids total des proportions non volatiles de la formulation, et la somme des composants présents vaut à chaque fois 100 % en poids, la cellulose microfibrillée présentant des fibrilles d'un diamètre de 10 à 100 nm, déterminé au microscope électronique à balayage.

2. Formulation selon la revendication 1, **caractérisée en ce que** ledit au moins un polychloroprène se trouve sous forme de particules présentant une grosseur moyenne de particule de 30 à 500 nm et présente de préférence une teneur en monomères résiduels inférieure à 100 ppm.

3. Formulation selon la revendication 1 ou 2, **caractérisée en ce que** ledit au moins un copolymère d'ester de l'acide (méth)acrylique est au moins un copolymère de styrène-ester de l'acide (méth)acrylique.

4. Formulation selon l'une des revendications 1 à 3, **caractérisée en ce que**
a) ledit au moins un polychloroprène est présent à raison d'au moins 70 % en poids,
b) ledit au moins un copolymère d'ester de l'acide (méth)acrylique est présent à raison de 15 à 30 % en poids, de préférence de 18 à 28 % en poids,
c) ladite au moins une cellulose microfibrillée est présente à raison de 0,2 à 3 % en poids et
d) lesdits additifs le cas échéant présents sont présents à raison de 0,1 à 30 % en poids,
à chaque fois par rapport au poids total des proportions non volatiles de la formulation et la somme des composants présents vaut à chaque fois 100 % en poids.

5. Formulation selon l'une des revendications 1 à 4, **caractérisée en ce que** ledit au moins un polychloroprène présente jusqu'à 10 % en poids, par rapport au poids total dudit au moins un polychloroprène, de 2,3-dichlorobutadiène en tant que comonomère.

6. Formulation selon l'une des revendications 1 à 5, **caractérisée en ce que** ledit au moins un copolymère d'ester de l'acide (méth)acrylique présente une viscosité ≤ 400 mPa*s, mesurée à 250 1/s, 23 °C selon la norme DIN EN ISO 3219-1994.

7. Formulation selon l'une des revendications 1 à 6, **caractérisée en ce que** les fibrilles de ladite au moins une cellulose microfibrillée présentent un diamètre de 10 à 100 nm.

8. Formulation selon l'une des revendications 1 à 7, **caractérisée en ce qu'**elle présente une viscosité de 500 à 7000 mPa*s, de préférence de 1500 à 6000 mPa*s, à chaque fois déterminée selon la norme DIN ISO 2555 au moyen d'un viscosimètre rotatif Brookfield.

9. Procédé pour la préparation d'une formulation aqueuse selon l'une des revendications 1 à 8, comprenant au moins les étapes :
(A) mise à disposition des composants a), b), c), le cas échéant d) et d'eau aux quantités correspondantes et
(B) mélange des composants mis à disposition dans l'étape(A) afin d'obtenir la formulation aqueuse.

10. Procédé selon la revendication 9, **caractérisé en ce qu'**une dispersion contenant au moins un polychloroprène est disposée au préalable et un mélange d'au moins une cellulose microfibrillée et d'au moins un copolymère d'ester de l'acide (méth)acrylique est ajouté.

11. Procédé selon la revendication 10, **caractérisé en ce que** le mélange d'au moins une cellulose microfibrillée et d'au moins un copolymère d'ester de l'acide (méth)acrylique est obtenu **en ce que** les composants mentionnés sont mélangés à des forces de cisaillement de 4 à 66 m/s, de préférence de 28 à 35 m/s, en particulier à l'aide d'un mélangeur statique et/ou d'un mélangeur dynamique.

12. Procédé selon l'une des revendications 9 à 11, **caractérisé en ce que** la préparation est réalisée dans un procédé continu ou dans un procédé discontinu.

13. Procédé de production d'un collage humide-sur-humide de substrats, **caractérisé en ce qu'**une composition adhésive contenant la formulation aqueuse selon l'une des revendications 1 à 8 est appliquée sur un substrat et un collage humide est effectué après au plus 5 min, de préférence au plus 2 min, de manière particulièrement préférée au plus 1 min, avant la formation de film.

14. Procédé de production d'un matériau composite par collage des différentes pièces d'assemblage du matériau composite, **caractérisé en ce que** la formulation aqueuse selon l'une des revendications 1 à 8 est utilisée.

15. Utilisation de la formulation aqueuse selon l'une des revendications 1 à 8 pour le collage de bois, papier, matériaux synthétiques thermoplastiques, matériaux synthétiques élastomères, matériaux synthétiques thermoplastiques-élastomères, produits vulcanisés, tissus textiles, tricots, treillis, cuir, métaux, céramique, fibrociment, grès, béton, mousses, à chaque fois les uns avec les autres et/ou sur des substrats poreux, de préférence d'une masse volumique inférieure à 1 kg/litre, en particulier pour le collage de mousses dans le collage de matelas, de meubles et/ou de rembourrages.
